(19) Europäisches Patentamt
European Patent Office
Office européen des brevets

(11) **EP 3 044 736 B1**

(12) **FASCICULE DE BREVET EUROPEEN**

(45) Date de publication et mention
de la délivrance du brevet:
**19.07.2017 Bulletin 2017/29**

(51) Int Cl.:
***G06K 19/07*** *(2006.01)*

(21) Numéro de dépôt: **14796157.7**

(22) Date de dépôt: **08.09.2014**

(86) Numéro de dépôt international:
**PCT/FR2014/052218**

(87) Numéro de publication internationale:
**WO 2015/036682 (19.03.2015 Gazette 2015/11)**

(54) **PROCEDE ET DISPOSITIF D'ÉMISSION DE DONNÉES PAR COUPLAGE INDUCTIF A AUTO-OSCILLATION CONTRÔLÉE**

VERFAHREN UND VORRICHTUNG ZUR DATENÜBERTRAGUNG MITTELS INDUKTIVER KOPPLUNG MIT GESTEUERTER SELBSTOSZILLATION

METHOD AND DEVICE FOR TRANSMITTING DATA BY INDUCTIVE COUPLING WITH CONTROLLED SELF-OSCILLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2013 FR 1358837**

(43) Date de publication de la demande:
**20.07.2016 Bulletin 2016/29**

(60) Demande divisionnaire:
**17175007.8**

(73) Titulaire: **Inside Secure**
**13590 Meyreuil (FR)**

(72) Inventeurs:
• **MICHEL, Jean-Yves**
**F-06220 Vallauris (FR)**
• **SCHOUTEN, Robert**
**F-06130 Grasse (FR)**

(74) Mandataire: **Marchand, André et al**
**OMNIPAT**
**24 Place des Martyrs de la Résistance**
**13100 Aix-en-Provence (FR)**

(56) Documents cités:
**WO-A2-2012/038664      FR-A1- 2 681 166**
**GB-A- 2 242 043**

**Description**

La présente invention concerne un procédé d'émission de données par couplage inductif, comprenant une étape consistant à appliquer à un circuit d'antenne inductif accordé des salves d'un signal périodique, pour faire apparaître un signal d'antenne générateur d'un champ magnétique, dans lequel l'amplitude de chaque salve est délimitée par un signal d'enveloppe présentant un front montant et un front descendant.

La présente invention concerne notamment un procédé de modulation de charge active pour dispositif NFC ("Near Field Communication") du type décrit dans le brevet EP 1 327 222. Le procédé comprend l'application au circuit d'antenne des salves du signal périodique en présence d'un champ magnétique externe émis par un lecteur NFC. Les salves de signal périodique génèrent des salves correspondantes ttt d'un champ magnétique qui se superpose à celui émis par le lecteur NFC, et sont perçues par ce dernier comme une modulation de charge passive. Par rapport à la modulation de charge passive, la modulation de charge active offre l'avantage d'une distance de communication supérieure.

La demande EP 2 431 925 concerne un perfectionnement de ce procédé de modulation de charge active et propose de resynchroniser la fréquence du signal périodique sur celle du champ magnétique externe après chaque application d'une salve au circuit d'antenne, au lieu de resynchroniser ce signal avant chaque nouvelle trame de données. Le procédé de modulation de charge active comprend alors une alternance de périodes d'émission des salves et de phases de resynchronisation sur le champ magnétique externe.

La demande WO 2012/038664 signale toutefois qu'après application d'une salve du signal périodique au circuit d'antenne, ce dernier présente une oscillation résiduelle ("ringing") qui se superpose au signal d'antenne "utile" induit par le champ magnétique externe et est susceptible de fausser le processus de resynchronisation. Le processus de resynchronisation utilise en effet le signal d'antenne induit par le champ externe comme signal de resynchronisation. Si ce signal comporte des résidus oscillatoires de la salve qui vient d'être appliquée au circuit d'antenne, ceux-ci se superposent au signal d'antenne utile induit par le champ externe et peuvent fausser le processus de resynchronisation sur le champ externe.

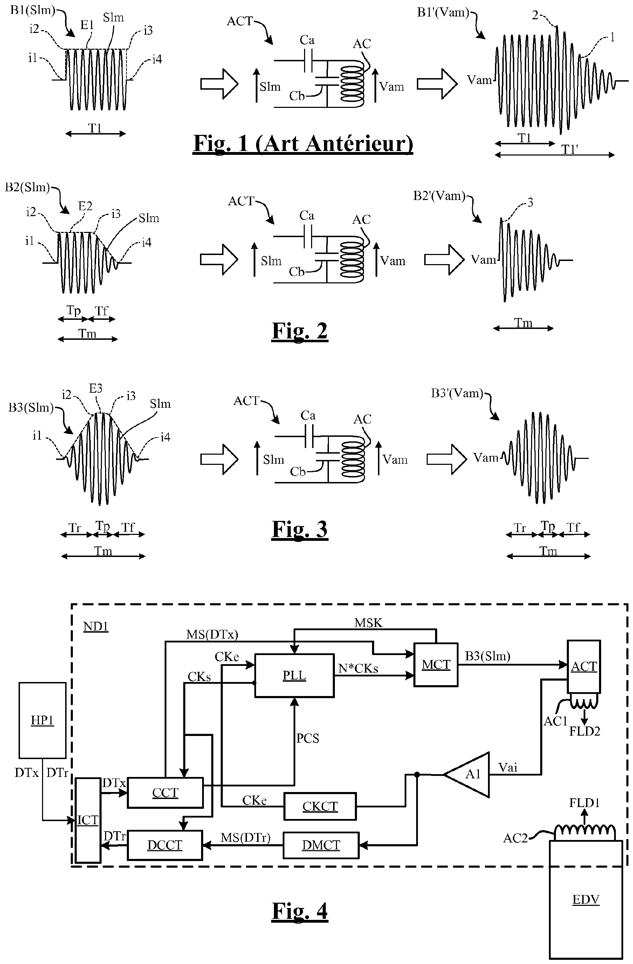

A titre d'illustration, la figure 1 montre la forme d'une salve B1 d'un signal périodique Slm appliquée à un circuit d'antenne ACT, ainsi que le signal d'antenne Vam qui en résulte. Le circuit d'antenne ACT est un circuit résonnant accordé sur la fréquence du signal périodique Slm, et comprend par exemple une bobine d'antenne AC, un condensateur série Ca et un condensateur parallèle Cb. La salve B1 ou "salve incidente", provoque l'apparition dans le circuit d'antenne d'une salve B1' de signal d'antenne Vam, ou "salve résultante", qui elle-même génère une salve de champ magnétique de même forme.

La salve incidente B1 est délimitée dans sa durée et son amplitude par un signal d'enveloppe E1 de forme carrée, de durée T1, présentant un front montant et un front descendant. Le front montant s'étend entre un point d'inflexion bas i1 et un point d'inflexion haut i2. Le front descendant s'étend entre un point d'inflexion haut i3 et un point d'inflexion bas i4. L'amplitude du signal périodique Slm est nulle avant le front montant et après le front descendant, et est généralement constante entre les deux fronts. Après application de la salve incidente B1, le signal d'antenne Vam présente une oscillation transitoire 1 d'une amplitude non négligeable qui peut, dans certains cas, présenter des suroscillations 2 d'une amplitude supérieure à l'amplitude maximale que présente le signal d'antenne Vam pendant l'application de la salve incidente B1. De ce fait, la salve résultante B1' présente une durée T1' pouvant être très supérieure à la durée T1 de la salve incidente B1. Lorsque le temps T1'-T1 est égal ou supérieur au temps séparant l'émission de deux salves B1, le dispositif qui émet les salves B1 ne peut pas se resynchroniser sur un champ externe, au risque de se resynchroniser sur le signal qu'il a lui-même émis.

Pour pallier cet inconvénient, la demande WO 2012/038664 enseigne de court-circuiter ou de désaccorder le circuit d'antenne au moyen d'un interrupteur, immédiatement après application de la salve incidente B1. Le procédé de modulation de charge active comprend alors, après application de la salve B1 et avant la phase de resynchronisation, une phase d'amortissement pendant laquelle le circuit d'antenne est court-circuité ou désaccordé par l'interrupteur, suivie d'une phase de rétablissement au cours de laquelle le signal d'antenne utile induit par le champ magnétique externe se rétablit naturellement sans être "pollué" par l'oscillation transitoire générée par la salve incidente B1.

Cette solution présente l'avantage d'être simple à mettre en oeuvre et d'être efficace. Toutefois, l'interrupteur d'amortissement doit supporter des tensions d'antenne pouvant atteindre 10 à 15 V. Or, certaines filières technologiques susceptibles d'être utilisées pour réaliser des dispositifs NFC intégrés sur microplaquettes de semi-conducteur, telle que les filières de sous-micronique profonde ("deep-submicron"), ne permettent pas de réaliser des transistors capables de supporter des tensions aussi élevées.

Il pourrait donc être souhaité de prévoir un procédé de modulation de charge active ne nécessitant pas un tel interrupteur d'amortissement.

De façon plus générale, il pourrait être souhaité de prévoir un procédé d'émission de données par émission de salves de champ magnétique, dans lequel le phénomène d'auto-oscillation du circuit d'antenne est contrôlé par un autre moyen qu'un interrupteur d'amortissement.

Des modes de réalisation de l'invention concernent un procédé d'émission de données par couplage inductif, comprenant une étape consistant à appliquer à un circuit d'antenne inductif accordé des salves d'un signal périodique, pour faire apparaître un signal d'antenne générateur d'un champ magnétique, dans lequel l'amplitude de chaque salve est délimitée par un signal d'enveloppe présentant un front montant et un front descendant, et une étape consistant à conformer au moins le front descendant du signal d'enveloppe au moyen d'un circuit de mise en forme numérique ou analogique, de manière à atténuer ou supprimer des oscillations transitoires du signal d'antenne qui apparaîtraient dans le circuit d'antenne après chaque application d'une salve si l'on appliquait à celui-ci des salves de signal périodique ayant un signal d'enveloppe de forme carrée.

Selon un mode de réalisation, le front descendant du signal d'enveloppe est conformé de manière que sa dérivée première n'excède pas une valeur limite déterminée en tenant compte de l'amplitude maximale des oscillations transitoires pouvant être tolérée dans le circuit d'antenne.

Selon un mode de réalisation, le front descendant du signal d'enveloppe est conformé de manière que sa dérivée première présente une valeur maximale égale à $A0*\pi*Fc/2$, Fc étant la fréquence du signal périodique, et A0 l'amplitude du signal d'enveloppe.

Selon un mode de réalisation, le front descendant du signal d'enveloppe est conformé de manière qu'immédiatement après application d'une salve du signal périodique, le signal d'antenne présente, en l'absence d'un champ magnétique externe, une amplitude inférieure à un pourcentage de l'amplitude maximale qu'il présente pendant l'application de la salve, choisi entre 5% et 50%.

Selon un mode de réalisation, le procédé comprend l'étape consistant à conférer au front descendant du signal d'enveloppe une forme déterminée par une fonction mathématique dont la dérivée est une fonction continue.

Selon un mode de réalisation, le procédé comprend l'étape consistant à conférer au front descendant une forme déterminée par la fonction cosinus surélevé calculée sur une échelle de temps lui conférant la valeur 1 à un point d'inflexion haut du front descendant et la valeur 0 à un point d'inflexion bas du front descendant.

Selon un mode de réalisation, le procédé comprend les étapes consistant à conférer au front descendant du signal d'enveloppe une forme déterminée par un ensemble de points stockés dans une mémoire et définissant par valeurs discrètes une salve du signal périodique.

Selon un mode de réalisation, le procédé comprend une étape consistant à conformer également le front montant du signal d'enveloppe de manière que la dérivée première du front montant soit continue.

Selon un mode de réalisation, le signal périodique présente un taux de distorsion harmonique totale inférieur à 20%.

Selon un mode de réalisation, le procédé est appliqué à l'émission de données par modulation de charge active, les salves du signal périodique sont appliquées au circuit d'antenne en présence d'un champ magnétique alternatif externe, et le procédé comprend une étape de synchronisation de la fréquence du signal périodique sur la fréquence du champ magnétique externe, entre deux applications d'une salve du signal périodique au circuit d'antenne.

Des modes de réalisation de l'invention concernent également un dispositif d'émission de données par couplage inductif, comprenant un circuit d'antenne inductif accordé et un circuit de modulation d'amplitude pour appliquer au circuit d'antenne des salves d'un signal périodique, et faire apparaître un signal d'antenne générateur d'un champ magnétique, l'amplitude de chaque salve étant délimitée par un signal d'enveloppe présentant un front montant et un front descendant, le circuit de modulation étant configuré pour mettre en oeuvre le procédé tel que précédemment décrit.

Des modes de réalisation de l'invention concernent également un objet portatif électronique comprenant un tel dispositif.

Des exemples de réalisation d'un procédé d'émission de données selon l'invention et d'un dispositif NFC mettant en oeuvre ce procédé seront décrits dans ce qui suit à titre non limitatif en référence aux figures jointes, parmi lesquelles :

- la figure 1 précédemment décrite montre la forme d'une salve incidente de signal périodique appliquée à un circuit d'antenne, et la forme de la salve résultante,
- la figure 2 montre la forme d'une salve incidente de signal périodique selon un premier mode de réalisation du procédé de l'invention, et la forme de la salve résultante,
- la figure 3 montre la forme d'une salve incidente de signal périodique selon un second mode de réalisation du procédé de l'invention, et la forme de la salve résultante,
- la figure 4 est le schéma bloc d'un premier exemple de réalisation d'un dispositif NFC mettant en oeuvre le procédé de l'invention,
- les figures 5A à 5E sont des chronogrammes montrant divers signaux apparaissant dans le dispositif de la figure 4,
- la figure 6 montre des exemples de réalisation d'une boucle à verrouillage de phase et d'un circuit de modulation représentés sous forme de blocs sur la figure 4,
- la figure 7 est la courbe d'un signal numérique fourni par le circuit de modulation de la figure 6,
- la figure 8 montre un second exemple de réalisation du circuit de modulation représenté sous forme de bloc sur la figure 4,

- les figures 9, 10 et 11 montrent des exemples d'objets portatifs électroniques comprenant un dispositif NFC selon l'invention.

On a précédemment décrit, en relation avec la figure 1, la réponse d'un circuit d'antenne inductif accordé ACT à une salve incidente B1 d'un signal périodique Slm dont l'amplitude est délimitée par un signal d'enveloppe E1 de forme carrée. Cette réponse se caractérise par une salve résultante B1' incluant une oscillation transitoire du signal d'antenne Vam apparaissant après l'application de la salve incidente B1.

Des modes de réalisation de l'invention concernent un procédé permettant de contrôler la réponse du circuit d'antenne à une salve incidente de signal périodique, et donc de contrôler la forme de la salve résultante, sans nécessiter un interrupteur d'amortissement. Ce procédé est initialement destiné à être appliqué à la technique de modulation de charge active pour permettre une resynchronisation sur un champ externe après émission d'une salve, mais peut trouver d'autres applications qui seront évoquées plus loin.

Ce procédé se fonde sur la théorie des circuits résonnants transposée au domaine de l'invention, à savoir le domaine de l'application de salves d'un signal périodique à un circuit d'antenne inductif accordé. La théorie des circuits résonnants indique que l'application à un circuit résonnant d'un signal d'excitation dont la forme est celle d'une fonction échelon ("step function") se traduit par une oscillation transitoire du circuit résonnant due au fait qu'une telle fonction présente une dérivée discontinue. Un signal carré est un cas particulier de fonction échelon, et présente une dérivée qui tend vers l'infini positif sur son front montant et vers l'infini négatif sur son front descendant. Un signal carré "réel" fourni par un circuit électronique, même s'il comporte des fronts montants et descendants qui ne sont pas parfaitement verticaux en raison de capacités ou d'inductances parasites dans les lignes de transmission, présente néanmoins des sauts importants de sa dérivée aux points d'inflexion bas i1 et haut i2 du front montant et aux point d'inflexion bas i3 et haut i4 du front descendant. Ces sauts, sans nécessairement tendre vers l'infini, sont également considérés dans le cadre de l'invention comme des discontinuités en ce qu'ils sont responsables de la réponse oscillatoire du circuit d'antenne auquel le signal d'excitation est appliqué.

Cette réponse oscillatoire transitoire peut être atténuée voire supprimée en utilisant un signal d'excitation ayant une dérivée continue. Notamment, les théories mathématiques développées dans le cadre de la mise en oeuvre de la Transformée de Fourrier Rapide (FFT) ont défini des fonctions dites de fenêtrage, ou "fonctions fenêtre d'observation", telles que la fonction de Hann, permettant d'échantillonner un signal en vue de son analyse de Fourrier Rapide sur un nombre de points fini, sans générer des composantes harmoniques parasites en bord de fenêtre qui fausseraient l'analyse harmonique de ce signal. Lorsqu'elles sont utilisées pour mettre en forme un signal d'excitation appliqué à un circuit résonnant, de telles fonctions ne provoquent pas de réponse oscillatoire transitoire de celui-ci, ou provoquent une réponse transitoire fortement atténuée.

Des modes de réalisation de l'invention se fondent sur ce qui précède en faisant l'analogie entre un signal d'excitation appliqué à un circuit résonnant et le signal d'enveloppe d'une salve du signal périodique Slm appliquée à un circuit d'antenne inductif accordé. On considère ici que le signal d'enveloppe est responsable de la réponse oscillatoire du circuit d'antenne, notamment lorsque le signal périodique Slm dont il délimite l'amplitude présente un faible taux de distorsion harmonique et n'est pas susceptible de générer une telle réponse oscillatoire.

Selon un mode de réalisation de l'invention, une salve B2(Slm) du signal périodique Slm est conformée comme montré sur la figure 2, de manière à présenter un signal d'enveloppe E2 ayant une dérivée continue sur son front descendant. Selon un autre mode de réalisation, une salve B3(Slm) du signal périodique Slm est conformée comme montré sur la figure 3, de manière à présenter un signal d'enveloppe E3 ayant une dérivée continue sur son front montant et sur son front descendant.

La notion de "dérivée continue" au sens des présents modes de réalisation de l'invention, englobe le cas où la dérivée présente des sauts de valeurs qui ne sont pas rédhibitoires pour l'application visée, c'est-à-dire des sauts de valeurs qui n'excèdent pas une valeur limite déterminée en tenant compte de l'amplitude maximale des oscillations transitoires pouvant être tolérée dans le circuit d'antenne, cette amplitude maximale étant fonction de l'application visée. Cette notion peut donc être mise en oeuvre de deux manières :

i) de manière empirique, en recherchant, à partir d'un circuit d'antenne de structure connue, par exemple au moyen d'outils de simulation, des formes de signal d'enveloppe ayant des sauts de dérivés inférieurs à un certain seuil et tels que la réponse oscillatoire du circuit d'antenne soit acceptable pour l'application visée. Par exemple, dans une application à la modulation de charge active, on visera une période oscillatoire d'une durée inférieure à la période de temps dont on dispose pour resynchroniser le dispositif modulateur sur le champ magnétique externe,

ii) en définissant une limite numérique aux sauts de la dérivée. On a précédemment indiqué que la dérivée réelle d'un signal d'enveloppe carré appliqué à une ligne de transmission présentant des capacités ou inductances parasites ne présente pas de sauts vers l'infini et est donc "continue" stricto sensu en raison de ces éléments parasites. Toutefois, cette dérivée présente des sauts de valeurs générateurs d'une réponse oscillatoire du circuit d'antenne pouvant être rédhibitoire pour l'application visée. Par ailleurs, un signal d'enveloppe trapézoïdal, même si sa dérivée théorique n'est pas continue, améliore sensiblement la réponse du circuit d'antenne par rapport à un signal d'enveloppe de forme carrée. Ainsi, une définition de la notion de "dérivée continue" au sens de certains modes de réalisation de l'invention englobe un signal d'enveloppe ayant une dérivée qui ne dépasse pas une limite telle que le temps de descente du signal d'enveloppe soit au moins supérieur ou égal à la période du signal périodique Slm. Cette limite est dans ce cas égale à A0*$\pi$*Fc/2, Fc étant la fréquence du signal Slm, et A0 l'amplitude du signal d'enveloppe. Dans une application où Fc=13,56 MHz, la valeur maximale de la dérivée du signal d'enveloppe est donc égale à A0*21,29*$10^6$ s$^{-1}$.

Sur la figure 2, la durée de la salve incidente B2 du signal périodique Slm est notée Tm. Le signal d'enveloppe E2 comprend un front montant abrupt entre le point d'inflexion i1 et le point d'inflexion i2, de durée théoriquement nulle, un plateau de durée Tp entre le point d'inflexion i2 et le point d'inflexion i3, et un front descendant doux sensiblement en forme de demi-cloche, de durée Tf, entre le point d'inflexion i3 et le point d'inflexion i4. Cette forme de front descendant aux contours doux est déterminée de manière à présenter une dérivée continue.

La salve résultante B2' de signal d'antenne Vam apparaissant dans le circuit d'antenne ACT présente une suroscillation 3 causée par le front montant du signal d'enveloppe E2 mais ne présente aucune oscillation transitoire résiduelle causée par le front descendant. La durée effective de la salve résultante B2' est ici égale à la durée Tm de la salve incidente B2.

Sur la figure 3, la durée de la salve incidente B3 du signal périodique Slm est également Tm. L'enveloppe E3 de la salve incidente présente une symétrie axiale et comprend un front montant doux en forme de demi-cloche entre le point d'inflexion i1 et le point d'inflexion i2, de durée Tr, un plateau de durée Tp entre le point d'inflexion i2 et le point d'inflexion i3, et un front descendant doux en forme de demi-cloche, de durée Tf, du point d'inflexion i3 au point d'inflexion i4. Le signal d'antenne Vam apparaissant dans le circuit ACT ne présent ici aucune suroscillation ou oscillation transitoire et la durée effective de la salve résultante B3' est de nouveau égale à la durée Tm de la salve B3.

Les formes des salves résultantes B2', B3' montrées sur les figure 2 et 3 sont "idéales". Toutefois, en pratique, le degré d'atténuation de l'oscillation résiduelle après application de la salve incidente dépend de la précision des moyens mis en oeuvre pour conformer l'enveloppe de la salve incidente et les choix de conformation de la salve, notamment :

1) la salve incidente peut être conformée sur son front descendant seulement (salve de type B2) ou sur ses fronts montant et descendant (salve de type B3). L'utilisation d'une salve de type B3 peut être avantageuse sur une salve de type B2 lorsque le front montant de la salve B2 génère des oscillations transitoires de durée supérieure à la durée de la salve,

2) la conformation des fronts de manière que leur dérivée soit continue peut être réalisée au moyen d'un filtre analogique passe-bas d'ordre 1 ou d'ordre 2, en transformant au moyen d'un tel filtre un signal d'enveloppe carré en un signal d'enveloppe ayant des fronts de forme adoucie,

3) la conformation des fronts de manière que leur dérivée soit continue peut être réalisée avec une grande précision au moyen d'une fonction mathématique du type décrit plus haut, en synthétisant le signal périodique Slm pour contrôler numériquement ses variations d'amplitude.

Il résulte de ce qui vient d'être décrit que l'amplitude de l'oscillation résiduelle du signal d'antenne Vam après application de la salve incidente (soit après le dernier point d'inflexion i4) n'est pas nécessairement nulle. Elle peut simplement être inférieure à l'amplitude maximale que le signal d'antenne Vam présente pendant l'application de la salve incidente dans une proportion comprise entre 5% et 50%, ou comprise entre 1% et 50%. Une atténuation "imparfaite" peut en effet s'avérer suffisante en fonction du cahier des charges imposé.

Par exemple, dans une application du procédé de l'invention à une modulation de charge active avec resynchronisation sur un champ magnétique externe immédiatement après application d'une salve incidente, l'amplitude de l'oscillation résiduelle pouvant être tolérée en fin de salve incidente, soit au moment de la resynchronisation, dépend de l'amplitude du signal induit par le champ magnétique externe, et plus particulièrement du rapport entre l'amplitude du signal induit et celui de l'oscillation résiduelle. Il a par exemple été mis en évidence que pour obtenir une erreur de phase inférieure à 30°, l'amplitude de l'oscillation résiduelle ne doit pas excéder 57,7% de l'amplitude du signal induit. Ce rapport correspond à l'une des atténuations précitées, qui ont été précédemment exprimées par des pourcentages se référant à l'amplitude maximale du signal d'antenne Vam pendant l'application de la salve incidente, sans se référer à l'amplitude du signal induit par le champ externe.

Si par ailleurs une période de rétablissement est prévue après la période de modulation de charge active, pour être certain que le rapport d'amplitudes précité est inférieur à 57,7% au moment de la resynchronisation, le temps qu'il reste pour conduire cette resynchronisation dépend de la fréquence du signal de données émis au moyen des salves incidentes, qui détermine la durée des "silences" entre deux salves, à laquelle on doit soustraire la durée de la phase de rétablissement, qui elle-même dépend de l'amplitude de l'oscillation résiduelle en fin de salve et sera d'autant plus longue que l'amplitude de l'oscillation résiduelle est élevée, jusqu'à ce que le rapport d'amplitude inférieur à 57,7% soit atteint.

Dans un mode de réalisation du procédé de l'invention, l'amplitude A(t) des fronts descendant des salves incidentes est conformée numériquement au moyen de la fonction cosinus surélevé ("raised cosine") formulée de la manière suivante :

$$A(t) = A0*(1+\cos(\pi*t/Tf))/2,$$

dont la dérivée est :

$$d(A(t)/dt = A0*\pi/Tf/2*\sin(\pi*t/Tf)$$

A0 étant l'amplitude maximale du signal d'enveloppe (soit l'amplitude maximale du signal périodique Slm), Tf la durée du front descendant, et t le temps selon un axe des temps ayant pour origine le point d'inflexion i3 du front descendant. Cette fonction amplitude A(t) présente alors une valeur constante A0 avant le point d'inflexion i3 et une valeur nulle après le second point d'inflexion i4.

Comme le montre le tableau ci-dessous, la dérivée de la fonction A(t) est donc nulle avant et après les points d'inflexion i3, i4. Entre les points d'inflexion i3 et i4, soit pendant le front descendant, la dérivée de la fonction A(t) est la dérivée de la fonction cosinus surélevé. Cette dérivée est également nulle au point d'inflexion i3 et i4, et évolue de manière constante selon la fonction sinus entre les deux points. La fonction A(t) ne présente donc aucun saut de sa dérivée entre les points d'inflexion i2 et i4.

|  | Fonction A(t) | Dérivée d[A(t)]/dt |
|---|---|---|
| Entre i2 et i3 | A0 | 0 |
| Au point i3 (t=0) | A0*(1+cos($\pi$*0/Tf))/2 = A0 | 0 |
| Entre i3 et i4 | A0*(1+cos($\pi$*t/Tf))/2 | A0*$\pi$/Tf/2*sin($\pi$*t/Tf) |
| Au point i4 (t=Tf) | A0*(1+cos($\pi$*Tf/Tf))/2 = 0 | 0 |
| Après i4 | 0 | 0 |

La fonction cosinus surélevé peut également être utilisée pour conformer le front montant, et obtenir une salve de type B3 ayant une enveloppe présentant une symétrie axiale. Dans ce cas, la dérivée du signal d'enveloppe est parfaitement continue pendant toute la durée de la salve.

Toute autre fonction mathématique, notamment de fenêtrage pour la Transformée de Fourrier Rapide, ayant une dérivée offrant les propriétés requises, peut être utilisée par l'homme de l'art à la place de la fonction cosinus surélevé.

Par ailleurs, il va de soi que le signal périodique Slm ne doit pas lui-même présenter des fronts très raides qui généreraient une réponse oscillatoire du circuit d'antenne. Dans l'art antérieur, le signal Slm est généralement filtré avant d'être appliqué au circuit d'antenne, et n'est donc pas responsable du problème technique résolu dans la présente demande par un contrôle de la forme du signal d'enveloppe. De façon générale, si le signal Slm est obtenu par filtrage d'un signal initialement de forme carrée, ce filtrage doit de préférence être tel que le taux de distorsion harmonique totale du signal Slm soit inférieur à 20% (soit le rapport entre d'une part la somme des énergies des harmoniques et d'autre part l'énergie de la fondamentale du signal Slm). Lorsque le signal Slm est généré numériquement comme cela est le cas dans un exemple de réalisation de l'invention décrit plus loin, le signal Slm peut être généré comme une parfaite sinusoïde ayant un taux de distorsion harmonique nul ou quasi nul.

On décrira dans ce qui suit un exemple de réalisation d'un dispositif NFC à modulation de charge active mettant en oeuvre un mode de réalisation d'un procédé d'émission de données selon l'invention. Cet exemple de réalisation constitue un cas particulier d'application du procédé de l'invention à la modulation de charge active, permettant d'éviter le recours à un interrupteur d'amortissement après application d'une salve incidente, pour la resynchronisation du signal périodique entre deux salves de modulation de charge.

Le dispositif ND1 comprend :

- un circuit d'interface de communication à contact ICT,
- un circuit d'antenne inductif accordé ACT, comprenant une bobine d'antenne AC1 et pouvant comporter divers composants d'accord tels les condensateurs Ca, Cb précédemment décrits,
- un circuit de démodulation DMCT couplé à un circuit de décodage DCCT, pour recevoir des données DTr via le circuit d'antenne,
- un circuit de codage CCT couplé à un circuit de modulation MCT, pour émettre des données DTx via le circuit d'antenne,
- une boucle à verrouillage de phase PLL ("Phase Locked Loop"), et
- un circuit d'extraction d'horloge CKCT.

La figure 4 montre également un processeur hôte HP1 du dispositif ND1, et un dispositif NFC externe EDV équipé d'une bobine d'antenne AC2 et fonctionnant dans le mode lecteur NFC en émettant un champ magnétique externe périodique FLD1 qui oscille par exemple à une fréquence porteuse de 13,56 MHz (normes ISO 14443, ISO 13693, Sony Felica®). Les circuits d'antenne des deux dispositifs ND1 et EDV sont supposés accordés sur cette fréquence, éventuellement à quelques pourcentages de celle-ci près.

Le circuit d'interface de communication à contact ICT permet de relier le dispositif ND1 au processeur hôte HP1. Il permet plus particulièrement au processeur hôte HP1 de fournir au dispositif ND1 des données DTx destinées au dispositif externe EDV, et reçoit du dispositif ND1 des données DTr envoyées par le dispositif externe EDV. Les données DTx/DTr sont par exemple des données d'application d'une application NFC (transaction, paiement, échanges d'informations, etc.). Dans une variante, le dispositif ND1 peut comprendre un processeur interne configuré pour gérer des applications sans contact, qui génère alors lui-même les données DTx et traite les données DTr sans faire appel à un processeur hôte.

Le circuit d'extraction d'horloge CKCT et le circuit démodulateur DMCT reçoivent, par l'intermédiaire d'un amplificateur A1, un signal d'antenne Vai induit dans le circuit d'antenne ACT par le champ magnétique externe FLD1. Le circuit d'extraction d'horloge CKCT fournit un signal d'horloge externe CKe dont la fréquence est celle du champ magnétique externe, soit 13,56 MHz dans le cadre des normes précitées. La boucle à verrouillage de phase PLL reçoit le signal d'horloge externe CKe et fournit un signal d'horloge interne CKs ainsi qu'un signal d'horloge d'échantillonnage N*CKs dont la fréquence est N fois celle du signal d'horloge CKs.

La boucle à verrouillage de phase PLL comporte un mode d'oscillation synchrone où elle est asservie au signal d'horloge externe CKe, le signal CKs étant alors synchronisé en phase et en fréquence sur le signal d'horloge CKe, et un mode de libre oscillation où le signal CKs n'est plus calé en phase et en fréquence sur le signal CKe. Le mode de libre oscillation est activé par un signal logique MSK fourni par le circuit de modulation MCT.

Pour l'envoi de données DTr au dispositif ND1, le dispositif externe EDV applique au champ magnétique FLD1 une modulation d'amplitude au moyen d'un signal de modulation binaire porteur de données MS(DTr). Le signal MS(DTr) se répercute dans le signal d'antenne induit Vai et est extrait de celui-ci par le circuit de démodulation DMCT, après suppression de la porteuse à 13,56 MHz. Le circuit DMCT fournit le signal de modulation MS(DTr) au circuit DCCT, qui en extrait les données DTr et les fournit au processeur hôte HP1 via le circuit d'interface de communication ICT.

Les données DTx à envoyer au dispositif externe EDV sont fournies au circuit de codage CCT par le processeur hôte HP1 via le circuit d'interface de communication ICT. Le circuit CCT fournit alors au circuit de modulation MCT un signal binaire de modulation porteur de données MS(DTx). Le signal de modulation MS(DTx) présente une fréquence dérivée de la fréquence du signal d'horloge CKs, par exemple 848 kHz (norme ISO 14443). Pour générer ce signal, le circuit CCT reçoit le signal d'horloge interne CKs fourni par la boucle à verrouillage de phase PLL.

Le circuit de modulation MCT est ici un circuit de modulation de charge active qui reçoit d'une part le signal d'échantillonnage N*CKs et d'autre part le signal de modulation MS(DTx). Le circuit MCT applique au circuit d'antenne ACT des salves B3 de signal périodique Slm du type décrit plus haut, entrecoupées de périodes de non-modulation où le signal Slm présente une valeur par défaut, généralement 0. Le signal Slm présente une fréquence égale à celle du signal d'horloge CKs et les salves B3 sont émises au rythme du signal de modulation MS(DTx).

Les salves B3 sont conformées de la manière décrite plus haut, afin de neutraliser ou au moins limiter le phénomène d'oscillation transitoire du circuit d'antenne ACT après chaque application d'une salve. Ainsi, lorsque le signal MS(DTx) passe à 1, le circuit d'antenne ACT reçoit une salve B3 du signal Slm et la bobine d'antenne AC1 émet une salve correspondante d'un champ magnétique FLD2. Les salves de champ magnétique FLD2 sont détectées par le dispositif externe EDV comme une modulation de charge passive. Ce dernier peut ainsi extraire de son propre signal d'antenne le signal MS(DTx), pour en déduire les données DTx envoyées par le dispositif ND1.

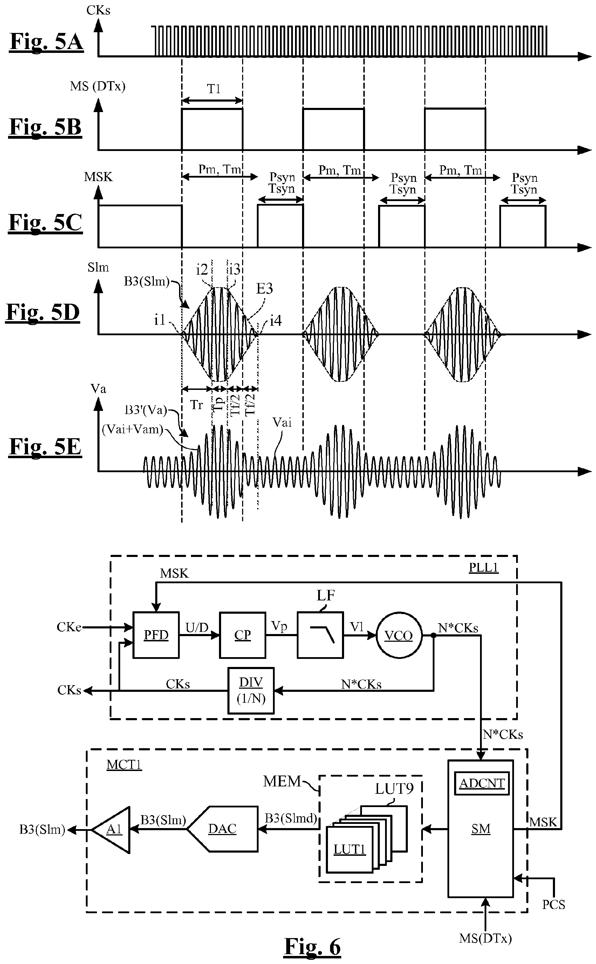

Les figures 5A à 5E illustrent le fonctionnement du dispositif ND1 lors de l'émission de données DTx et représentent respectivement le signal d'horloge CKs, le signal de données MS(DTx), le signal logique MSK, le signal Slm fourni par le circuit modulateur MCT, et le signal d'antenne Va présent dans le circuit d'antenne ACT. On distingue des phases de modulation de charge active Pm de durée Tm et des phases de resynchronisation Psyn de durée Tsyn.

Chaque phase de modulation de charge Pm est initiée lorsque le signal MS(DTx) passe à 1 (fig. 5B). Le circuit de modulation MCT applique une salve B3 du signal Slm au circuit d'antenne ACT (fig. 5D) et met le signal MSK à 0 pendant toute la durée de la salve (fig. 5C) pour que la boucle à verrouillage de phase PLL fonctionne en mode d'oscillation libre. Le signal d'antenne Va (fig. 5E) comprend alors une composante Vai induite par le champ magnétique externe FLD1 et une composante Vam générée dans le circuit d'antenne par le signal Slm. On suppose ici que les salves B3 ne laissent subsister dans le circuit d'antenne aucune oscillation transitoire de la composante Vam. Ainsi, après qu'une salve B3 a été appliquée au circuit d'antenne, le signal d'antenne Va ne comporte que la composante Vai induite par le champ externe FLD2 et la phase de synchronisation est immédiatement initiée. Le signal MSK est remis à 1 par le circuit MCT et la boucle à verrouillage de phase PLL se resynchronise sur le signal d'horloge externe CKe.

Dans un mode de réalisation où les salves B3 laissent subsister une trace d'oscillation de la composante Vam du signal d'antenne, un temps de relaxation peut être prévu entre les phases de modulation Pm et les phases de synchronisation Psyn. De façon générale, l'amortissement de l'oscillation transitoire de la composante Vam grâce à la forme particulière conférée aux salves B3 est déterminé de manière à ne pas rendre nécessaire l'emploi de l'interrupteur d'amortissement décrit par la demande WO 2012/038664.

En d'autres termes, la phase d'amortissement classiquement réalisée au moyen d'un tel interrupteur est implicitement incluse en tout ou en partie dans le front descendant des salves B3. Dans le mode de réalisation représenté à titre non limitatif, la fréquence des signaux CKe, CKs, Slm est 13,56 MHz et celle du signal de données MS(DTx) 848 KHz. Une période du signal de donnée SM(DTx) correspond à 16 périodes du signal Slm. La durée des salves B3 est sensiblement supérieure à la durée T1 pendant laquelle le signal MS(DTx) est à 1, qui s'étend sur 8 périodes du signal Slm. Les salves présentent un front montant de durée Tr qui s'étend sur 4 périodes du signal Slm, un plateau de durée Tp qui s'étend sur 2 périodes du signal Slm, et un front descendant de durée Tf qui s'étend sur 4 périodes du signal Slm, de sorte que Tr+Tp+Tf/2=T1. La durée des salves B3 est donc supérieure à la durée T1 de Tf/2 soit 2 périodes du signal Slm. La période de synchronisation s'étend sur 6 périodes restantes du signal Slm.

La figure 6 représente un mode de réalisation PLL1 de la boucle à verrouillage de phase PLL et un mode de réalisation MCT1 du circuit de modulation MCT.

La boucle à verrouillage de phase comprend un comparateur de phase PFD, une pompe de charges CP, un filtre de boucle LF, un oscillateur contrôlé en tension VCO et un diviseur de fréquence DIV par N, par exemple un compteur modulo N. L'oscillateur VCO fournit le signal d'échantillonnage N*CKs au circuit de modulation MCT1. Ce signal est également appliqué au diviseur DIV qui fournit le signal CKs sur une entrée du comparateur PFD ainsi qu'aux circuits CCT et DCCT. Une autre entrée du comparateur PFD reçoit le signal d'horloge externe CKe et une entrée de contrôle du comparateur PDF reçoit le signal MSK. Lorsque le signal MSK est à 1, le comparateur fournit à la pompe de charges deux signaux d'erreur U, D ("Up" et "Down") représentant l'erreur en phase ou en fréquence entre les signaux CKe et CKs. La pompe de charge fournit au filtre LF une tension Vp qui croit ou décroît en fonction des signaux U, D. La tension Vp est appliquée au filtre LF dont la sortie fournit une tension de boucle Vl appliquée à l'oscillateur VCO.

Le passage à 0 du signal MSK arrête le comparateur de phase. Les signaux U et D sont alors forcés à 0 et la pompe de charges s'arrête également, ce qui a pour effet de figer la tension de boucle Vl appliquée à l'oscillateur VCO. La boucle à verrouillage de phase continue ainsi d'osciller en mode d'oscillation libre à la dernière fréquence synchronisée atteinte avant le passage à 0 du signal MSK.

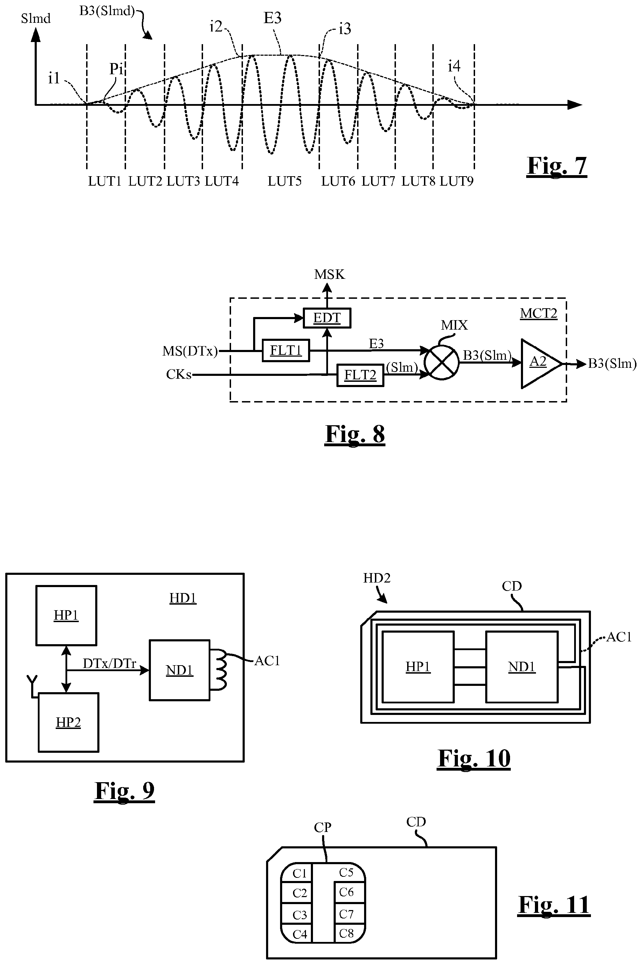

Le circuit de modulation MCT1 synthétise les salves B3 du signal périodique Slm au moyen d'un ensemble de valeurs numériques mémorisées dans des tables de correspondance LUT1 à LUT9 ("Lookup Table") localisées par exemple dans une mémoire non volatile MEM. Comme illustré sur la figure 7, ces valeurs mémorisées sont des points Pi d'une courbe d'un signal numérique Slmd qui présente la forme souhaitée des salves B3 du signal analogique Slm, ici une pure sinusoïde dont l'amplitude est déterminée par le signal d'enveloppe E3 de la salve B3. Dans le mode de réalisation retenu ici, chacune des tables LUT1, LUT2, LUT3 et LUT4 est affectée à la mémorisation des points Pi d'une période du signal Slmd lors du front montant de la salve B3, entre les points d'inflexion i1 et i2. Chacune des tables LUT6, LUT7, LUT8 et LUT9 est affectée à la mémorisation des points Pi d'une période du signal Slmd pendant le front descendant de la salve B3, entre les points d'inflexion i3 et i4. Enfin, la table LUT5 est affectée à la mémorisation des points Pi correspondant à deux périodes du signal CKs pendant la phase de plateau de la salve B3, entre les points d'inflexion i2 et i3. Le nombre de points Pi prévu pour synthétiser chaque période du signal Slmd est déterminé par la fréquence d'échantillonnage N*CKs fournie par la boucle à verrouillage de phase et est donc égal à N.

En référence de nouveau à la figure 6, le circuit MCT1 comprend également une machine d'états SM, un convertisseur analogique/numérique DAC, et un amplificateur A1. La machine d'états SM comporte un compteur d'adresse ADCNT pour l'adressage et la lecture, dans la mémoire MEM, des tables de correspondance LUT1-LUT9, et est cadencée par le signal N*CKs. La machine d'états reçoit également le signal de données MS(DTx) et est configurée pour initier la lecture des tables LUT1-LUT9 lorsque le signal MS(DTx) passe à 1, pour que l'émission d'une salve B3 soit synchronisée à ce signal. La sortie de la mémoire MEM fournit les points Pi au convertisseur DAC dont la sortie fournit au circuit d'antenne ACT, par l'intermédiaire de l'amplificateur A1, les salves B3 du signal périodique analogique Slm.

Dans un mode de réalisation, la machine d'états SM reçoit également un signal de contrôle de phase PCS et est configurée pour déphaser le signal périodique Slmd/Slm d'un angle déterminé par la valeur de ce signal, relativement au signal d'horloge CKs, lequel est en phase avec le signal d'horloge externe CKe. Certaines applications nécessitent en effet que les salves de champ magnétique FLD2 présentent un décalage de phase relativement au champ magnétique externe FLD1, pour une meilleure détection de la modulation de charge active par le dispositif externe EDV.

Ce mode de réalisation MCT1 du circuit de modulation MCT offre toute liberté dans le contrôle du signal d'enveloppe E3 de la salve B3, chaque point Pi étant calculé mathématiquement avant d'être mémorisé dans les tables de correspondance LUT1 à LUT9. Le signal l'enveloppe E3 peut donc être strictement conforme à la fonction de conformation souhaitée, par exemple la fonction cosinus surélevé.

La figure 8 montre un mode de réalisation analogique à moindre coût MCT2 du circuit de modulation MCT. Dans cet exemple de réalisation, le signal binaire porteur de données MS(DTx) est utilisé en tant que signal d'enveloppe des salves B3, et présente un rapport cyclique contrôlé par le circuit de codage CCT. On suppose comme précédemment qu'une période du signal de donnée SM(DTx) correspond à 16 périodes du signal Slm.

Le circuit MCT2 comprend des filtres passe-bas FLT1, FLT2 du premier ou du second ordre, un mélangeur MIX, un amplificateur A2, et un circuit de détection de fronts EDT fournissant le signal MSK à la boucle à verrouillage de phase PLL. Le filtre FLT1 reçoit le signal logique porteur de données MS(DTx) en tant que signal d'enveloppe et fournit sur une entrée du mélangeur MIX un signal d'enveloppe E3 tel que précédemment décrit ayant des fronts montant et descendant adoucis par le filtrage du premier ou second ordre, dont la dérivée est continue. Le signal d'horloge CKs fourni par la boucle à verrouillage de phase est ici de forme carrée et est transformé par le filtre FLT2 en signal périodique Slm à faible distorsion harmonique avant d'être appliqué sur une seconde entrée du mélangeur MIX. La sortie du mélangeur fournit au circuit d'antenne ACT, par l'intermédiaire de l'amplificateur A2, les salves B3 du signal Slm. Enfin, le détecteur EDT reçoit le signal de données MS(DTx) et le signal d'horloge CKs, et met le signal MSK à 0 sur détection d'un passage à 1 du signal MS(DTx).

Dans un mode de réalisation, la valeur 1 du signal MS(DTx) est maintenue pendant 6 cycles du signal d'horloge CKs, tandis que la valeur 0 est maintenue pendant 10 cycles d'horloge, soit un rapport cyclique initial de 6/16 contre 10/16 précédemment, pour tenir compte d'un étalement temporel des fronts montant et descendant du signal MS causé par le filtre FLT1.

Comme précédemment, un réglage de la phase du signal Slm pourrait être prévu, par exemple en insérant un déphaseur ajustable sur la seconde entrée du mélangeur MIX. Dans une variante de réalisation, le signal CKs est appliqué sans être filtré sur la seconde entrée du mélangeur MIX, et le filtre FLT2 est agencé en sortie de l'amplificateur A2.

Comme indiqué plus haut, un procédé d'émission de données selon l'invention, incluant un contrôle de la forme de l'enveloppe des salves, est susceptible de diverses autres variantes et applications. Il peut notamment être appliqué à une émission de données en mode lecteur NFC, pour contrôler plus précisément la durée des trous de modulation d'amplitude du champ magnétique émis, en supprimant les oscillations parasites qui apparaissent dans les trous de modulation, par exemple pour augmenter le débit des données émises en réduisant la durée des trous de modulation.

Un dispositif d'émission/réception de données selon l'invention est également susceptible de diverses applications. Dans un exemple d'application représenté sur la figure 9, le dispositif ND1 est intégré dans un dispositif portable HD1 et est relié à un ou plusieurs processeurs hôtes, ici deux processeurs hôtes HP1, HP2 qui utilisent le dispositif ND1 comme interface de communication sans contact (interface NFC). Le dispositif portable HD1 est par exemple un téléphone mobile, un baladeur audionumérique, un assistant personnel numérique (PDA). Le processeur HP1 peut être le processeur principal du dispositif, ou un processeur sécurisé tel un processeur de carte à puce. Le processeur HP2 peut par exemple être le processeur en bande de base d'un téléphone mobile, assurant également des communications via un canal de téléphonie mobile.

Dans un autre exemple d'application représenté sur les figures 10, 11 respectivement par une vue de dessus et une vue de dessous, le dispositif ND1 est relié à un processeur hôte HP1 et l'ensemble est intégré dans un support plastique CD pour former une carte à puce HD2. La bobine d'antenne AC1 est par exemple une bobine coplanaire présentant une ou plusieurs spires. Sur sa face arrière (figure 11) du support plastique CD, la carte HD2 est équipée d'un groupe CP de contacts. La carte HD2 peut par exemple former une carte SIM NFC. Le groupe de contacts peut comprendre des contacts C1 à C8 selon la norme ISO 7816. La carte HD2 peut également former une carte à puce destinée à être insérée dans un dispositif quelconque (téléphone portable, ordinateur personnel,...) en tant qu'interface de communication NFC.

## Revendications

1. Procédé d'émission de données par couplage inductif, comprenant une étape consistant à appliquer à un circuit d'antenne inductif accordé (ACT) des salves (B2, B3) d'un signal périodique (Slm) au rythme d'un signal porteur de données (MS(DTx)), pour faire apparaître un signal d'antenne (Vam) générateur d'un champ magnétique (FLD2), dans lequel l'amplitude de chaque salve est délimitée par un signal d'enveloppe (E2, E3) présentant un front montant (i1-i2) et un front descendant (i3-i4),
**caractérisé en ce qu'**il comprend une étape consistant à conformer au moins le front descendant du signal d'enveloppe (E2, E3) au moyen d'un circuit de mise en forme numérique (MCT1) ou analogique (FLT1), de manière à adoucir sa pente pour atténuer ou supprimer des oscillations transitoires du signal d'antenne (Vam) qui apparaîtraient dans le circuit d'antenne après chaque application d'une salve si l'on appliquait à celui-ci des salves de signal périodique ayant un signal d'enveloppe de forme carrée.

2. Procédé selon la revendication 1, dans lequel le front descendant du signal d'enveloppe est conformé de manière que sa dérivée première n'excède pas une valeur limite déterminée en tenant compte de l'amplitude maximale des oscillations transitoires pouvant être tolérée dans le circuit d'antenne.

3. Procédé selon l'une des revendications 1 et 2, dans lequel le front descendant du signal d'enveloppe est conformé de manière que sa dérivée première présente une valeur maximale égale à $A0*\pi*Fc/2$, Fc étant la fréquence du signal périodique (Slm), et A0 l'amplitude du signal d'enveloppe.

4. Procédé selon l'une des revendications 1 à 3, dans lequel le front descendant du signal d'enveloppe est conformé de manière qu'immédiatement après application d'une salve du signal périodique, le signal d'antenne (Vam) présente, en l'absence d'un champ magnétique externe (FLD1), une amplitude inférieure à un pourcentage de l'amplitude maximale qu'il présente pendant l'application de la salve, choisi entre 5% et 50%.

5. Procédé selon l'une des revendications 1 à 4, comprenant l'étape consistant à conférer au front descendant du signal d'enveloppe (E2, E3) une forme déterminée par une fonction mathématique dont la dérivée est une fonction continue.

6. Procédé selon la revendication 5, comprenant l'étape consistant à conférer au front descendant une forme déterminée par la fonction cosinus surélevé calculée sur une échelle de temps lui conférant la valeur 1 à un point d'inflexion haut (i3) du front descendant et la valeur 0 à un point d'inflexion bas (i4) du front descendant.

7. Procédé selon l'une des revendications 1 à 6, comprenant les étapes consistant à conférer au front descendant du signal d'enveloppe (E2, E3) une forme déterminée par un ensemble de points (Pi) stockés dans une mémoire (MEM, LUT1-LUT9) et définissant par valeurs discrètes une salve (B3) du signal périodique (Slm).

8. Procédé selon l'une des revendications 1 à 7, comprenant une étape consistant à conformer également le front montant du signal d'enveloppe (E3) de manière que la dérivée première du front montant soit continue.

9. Procédé selon l'une des revendications 1 à 8, dans lequel le signal périodique (Slm) présente un taux de distorsion harmonique totale inférieur à 20%.

10. Procédé selon l'une des revendications 1 à 9, pour l'émission de données par modulation de charge active, dans lequel les salves (B2, B3) du signal périodique (Slm) sont appliquées au circuit d'antenne (ACT) en présence d'un champ magnétique alternatif externe (FLD1), et comprenant une étape de synchronisation de la fréquence du signal périodique (Slm) sur la fréquence du champ magnétique externe, entre deux applications d'une salve du signal périodique (Slm) au circuit d'antenne (ACT).

11. Dispositif (ND1) d'émission de données par couplage inductif, comprenant un circuit d'antenne inductif accordé (ACT) et un circuit de modulation d'amplitude (MCT1, MCT2) pour appliquer au circuit d'antenne (ACT) des salves (B2, B3) d'un signal périodique (Slm), et faire apparaître un signal d'antenne (Vam) générateur d'un champ magnétique, l'amplitude de chaque salve étant délimitée par un signal d'enveloppe (E2, E3) présentant un front montant et un front descendant,
**caractérisé en ce que** le circuit de modulation (MCT1, MCT2) est configuré pour mettre en oeuvre le procédé selon l'une des revendications 1 à 10.

12. Objet portatif électronique (HD1, HD2) comprenant un dispositif selon la revendication 11.

**Patentansprüche**

1. Verfahren zur Aussendung von Daten durch induktive Kopplung, das einen Schritt umfasst, der darin besteht, an einen abgestimmten induktiven Antennenschaltkreis (ACT) Pulse (B2, B3) eines periodischen Signals (S1m) im Rhythmus von einem Datenträgersignal (MS (DTX)) anzulegen, um ein Antennensignal (Vam) als Generator eines Magnetfeldes (FLD2) auftreten zu lassen, wobei die Amplitude von jedem Puls durch ein Hüllkurvensignal (E2, E3) begrenzt ist, das eine ansteigende Flanke (i1-i2) und eine abfallende Flanke (i3-i4) aufweist, **dadurch gekennzeichnet, dass** es einen Schritt umfasst, der darin besteht, zumindest die abfallende Flanke des Hüllkurvensignals (E2, E3) mit Hilfe einer digitalen (MCT1) oder analogen (FLT1) Formatierungsschaltung anzupassen, um seine Steigung abzumildern, um transiente Schwingungen des Antennensignals (Vam), die in dem Antennenschaltkreis nach jeder Anwendung eines Pulses auftreten, zu reduzieren oder zu eliminieren, wenn an diesen Pulse von einem periodischen Signal angelegt werden, das ein rechteckiges Hüllkurvensignal hat.

2. Verfahren nach Anspruch 1, wobei die abfallende Flanke des Hüllkurvensignals so angepasst ist, dass seine erste Ableitung nicht einen Grenzwert überschreitet, der unter Berücksichtigung der maximalen Amplitude der transienten Schwingungen bestimmt ist, die in dem Antennenschaltkreis toleriert werden können.

3. Verfahren nach einem der Ansprüche 1 und 2, wobei die abfallende Flanke des Hüllkurvensignals so angepasst ist, dass seine erste Ableitung einen maximalen Wert gleich A0 * $\pi$ * Fc / 2 aufweist, wobei Fc die Frequenz des periodischen Signals (S1m) ist, und wobei A0 die Amplitude des Hüllkurvensignals ist.

4. Verfahren nach einem der Ansprüche 1 bis 3, wobei die abfallende Flanke des Hüllkurvensignals so angepasst ist, dass unmittelbar nach dem Anlegen eines Pulses des periodischen Signals das Antennensignal (Vam) in Abwesenheit eines externen Magnetfeldes (FLD1) eine Amplitude aufweist, die kleiner als ein Prozentsatz der maximalen Amplitude ist, die es während des Anlegens des Pulses aufweist, wobei er zwischen 5% und 50% gewählt ist.

5. Verfahren nach einem der Ansprüche 1 bis 4, das den Schritt umfasst, der darin besteht, der abfallenden Flanke des Hüllkurvensignals (E2, E3) eine durch eine mathematische Funktion bestimmte Form zu verleihen, deren Ableitung eine kontinuierliche Funktion ist.

6. Verfahren nach Anspruch 5, das den Schritt umfasst, der darin besteht, der abfallenden Flanke eine Form zu verleihen, die von der Funktion des erhöhten Kosinus bestimmt ist, die auf einem Zeitmaßstab berechnet ist, , die ihr den Wert 1 bei einem oberen Wendepunkt (i3) von der abfallenden Flanke und den Wert 0 bei einem unteren Wendepunkt (i4) der abfallenden Flanke verleiht.

7. Verfahren nach einem der Ansprüche 1 bis 6, das die Schritte umfasst, die darin bestehen, der abfallenden Flanke des Hüllkurvensignals (E2, E3) eine Form zu verleihen, die von einer Gesamtheit von Punkten (Pi) bestimmt ist, die in einem Speicher (MEM, LUT1-LUT9) gespeichert sind und durch diskrete Werte einen Puls (B3) des periodischen Signals (S1m) definieren.

8. Verfahren nach einem der Ansprüche 1 bis 7, das einen Schritt umfasst, der darin besteht, auch die ansteigende Flanke des Hüllkurvensignals (E3) so anzupassen, dass die erste Ableitung der ansteigenden Flanke kontinuierlich ist.

9. Verfahren nach einem der Ansprüche 1 bis 8, wobei das periodische Signal (S1m) einen Klirrfaktor von weniger als 20% aufweist.

10. Verfahren nach einem der Ansprüche 1 bis 9 zur Aussendung von Daten durch Modulation der aktiven Last, wobei die Pulse (B2, B3) des periodischen Signals (S1m) auf den Antennenkreis (ACT) in Gegenwart eines äußeren magnetischen Wechselfelds (FLD1) angelegt werden, und das einen Schritt zur Synchronisation der Frequenz des periodischen Signals (S1m) auf der Frequenz des externen Magnetfeldes zwischen zwei Anlegen eines Pulses des periodischen Signals (S1m) an den Antennenschaltkreis (ACT) umfasst.

11. Vorrichtung (ND1) zur Aussendung von Daten durch eine induktive Kopplung, die einen abgestimmten induktiven Antennenschaltkreis (ACT) und eine Amplitudenmodulationsschaltung (MCT1, MCT2) umfasst, um an den Antennenschaltkreis (ACT) Pulse (B2, B3) eines periodischen Signals (S1m) anzulegen und ein Antennensignal (Vam) als Generator eines Magnetfeldes auftreten zu lassen, wobei die Amplitude von jedem Puls durch ein Hüllkurvensignal (E2, E3) begrenzt ist, das eine ansteigende Flanke und eine abfallende Flanke aufweist, **dadurch gekennzeichnet, dass** die Modulationsschaltung (MCT1, MCT2) konfiguriert ist, das Verfahren nach einem der Ansprüche 1 bis 10 zu implementieren.

12. Elektronisches, tragbares Objekt (HD1, HD2), das eine Vorrichtung nach Anspruch 11 umfasst.

**Claims**

1.  1. A method for transmitting data by inductive coupling, comprising a step of applying bursts (B2, B3) of a periodic signal (Slm) to a tuned inductive antenna circuit (ACT) at the rate of a data-carrying signal (MS(DTx)), to produce an antenna signal (Vam) generating a magnetic field (FLD2), in which the amplitude of each burst is delimited by an envelope signal (E2, E3) having a rising edge (i1-i2) and a falling edge (i3-i4),
    **characterized in that** it comprises a step of shaping at least the falling edge of the envelope signal (E2, E3) by means of a digital (MCT1) or analog (FLT1) shaping circuit so as to flatten its slope to attenuate or remove transient oscillations of the antenna signal (Vam) that would appear in the antenna circuit after each application of a burst if bursts of a periodic signal with a square wave envelope signal were applied thereto.

2.  The method according to claim 1, wherein the falling edge of the envelope signal is shaped so that its first derivative does not exceed a limit value determined by taking into account the maximum amplitude of the transient oscillations that may be tolerated in the antenna circuit.

3.  The method according to one of claims 1 and 2, wherein the falling edge of the envelope signal is shaped so that its first derivative has a maximum value equal to $A0*\pi*Fc/2$, Fc being the frequency of the periodic signal (Slm), and A0 the amplitude of the envelope signal.

4.  The method according to one of claims 1 to 3, wherein the falling edge of the envelope signal is shaped so that immediately after applying a burst of the periodic signal, the antenna signal (Vam) has, in the absence of an external magnetic field (FLD1), an amplitude lower than a percentage of the maximum amplitude it has during the application of the burst, chosen between 5% and 50%.

5.  The method according to one of claims 1 to 4, comprising the step of giving the falling edge of the envelope signal (E2, E3) a shape determined by a mathematical function the derivative of which is a continuous function.

6.  The method according to claim 5, comprising the step of giving the falling edge a shape determined by the raised cosine function calculated on a time scale giving it the value 1 at a high inflection point (i3) of the falling edge and the value 0 at a low inflection point (i4) of the falling edge.

7.  The method according to one of claims 1 to 6, comprising the steps of giving the falling edge of the envelope signal (E2, E3) a shape determined by a set of points (Pi) stored in a memory (MEM, LUT1-LUT9) and defining by discrete values a burst (B3) of the periodic signal (Slm).

8.  The method according to one of claims 1 to 7, comprising a step of also shaping the rising edge of the envelope signal (E3) so that the first derivative of the rising edge is continuous.

9.  The method according to one of claims 1 to 8, wherein the periodic signal (Slm) has a total harmonic distortion rate lower than 20%.

10. The method according to one of claims 1 to 9, for transmitting data by active load modulation, wherein the bursts (B2, B3) of the periodic signal (Slm) are applied to the antenna circuit (ACT) in the presence of an external alternating magnetic field (FLD1), and comprising a step of synchronizing the frequency of the periodic signal (Slm) with the frequency of the external magnetic field, between two applications of a burst of the periodic signal (Slm) to the antenna circuit (ACT).

11. A device (ND1) for transmitting data by inductive coupling, comprising a tuned inductive antenna circuit (ACT) and an amplitude modulation circuit (MCT1, MCT2) for apply bursts (B2, B3) of a periodic signal (Slm) to the antenna circuit (ACT), and produce an antenna signal (Vam) generating a magnetic field, the amplitude of each burst being delimited by an envelope signal (E2, E3) having a rising edge and a falling edge,
    **characterized in that** the modulation circuit (MCT1, MCT2) is configured to implement the method according to one of claims 1 to 10.

12. A portable electronic object (HD1, HD2) comprising a device according to claim 11.

**Fig. 1 (Art Antérieur)**

**Fig. 2**

**Fig. 3**

**Fig. 4**

**EP 3 044 736 B1**

**Fig. 5A** CKs

**Fig. 5B** MS (DTx) — T1

**Fig. 5C** MSK — Pm, Tm / Psyn Tsyn

**Fig. 5D** Slm — B3(Slm), i1, i2, i3, i4, E3

**Fig. 5E** Va — B3'(Va), (Vai+Vam), Tr, Tp, Tf/2, Tf/2, Vai

**Fig. 6**

PLL1 — MSK, CKe, PFD, U/D, CP, Vp, LF, Vl, VCO, N*CKs, DIV (1/N), CKs

MCT1 — MEM, LUT9, LUT1, ADCNT, SM, DAC, B3(Slmd), B3(Slm), A1, B3(Slm), MSK, PCS, MS(DTx)

**Fig. 7**

**Fig. 8**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1327222 A
- EP 2431925 A
- WO 2012038664 A